# EUROPEAN PATENT APPLICATION

(11) **EP 4 011 545 A1**
(43) Date of publication of application: **15.06.2022**
(21) Application number: 20383079.9
(22) Date of filing: 10.12.2020
(51) Int. Cl.: B23Q 1/01, B23Q 11/12, B23Q 11/14, B23Q 39/00, B23Q 39/02

(54) **VERTICAL LATHE AND METHOD FOR CONTROLLING ITS DILATATION**

(71) Applicant: Fundación Tecnalia Research & Innovation, 20009 San Sebastián, Guipúzcoa (ES)
(72) Inventor: DRAVASA GURRUCHAGA, Juan José, 20009 San Sebastián - Guipúzcoa (ES); VALLEJO ARTOLA, Haritz, 20009 San Sebastián - Guipúzcoa (ES)
(74) Representative: Balder IP Law, S.L.

(57) **Abstract**

Vertical lathe (1) where X, Y and Z directions are defined, and comprising a support (T) for the part to be shaped, a milling head (MH) having an axis in the Z-direction; wherein the axis of the milling head (MH) is fixed in the Y-direction, a cross-rail (13) for guiding a relative movement between the milling head (MH) and the support (T) according to the X-direction and a cooling circuit (2) in the cross-rail (13). The invention also relates to a method of controlling the dilatation of the vertical lathe (1) by sensing the temperature (T) in an area of the cross-rail (13), comparing it to temperature thresholds, and opening a valve to allow flow of cooling fluid if the sensed temperature (T) is higher than an upper threshold temperature (UT) and closing the valve to stop flow through the cooling circuit (2) if the sensed temperature (T) is lower than a lower threshold temperature (LT).

## Description

### TECHNICAL FIELD

This invention relates to vertical lathes, that comprise a cross-rail for guiding a relative x-movement between the milling head and the table, including among others those comprising one or two vertical columns and a large transversal cross-rail for the displacement of a milling head in an x-direction, wherein the milling head is fixed in the y-direction and the y-alignment of the milling head is affected by ambient temperature fluctuations.

### STATE OF THE ART

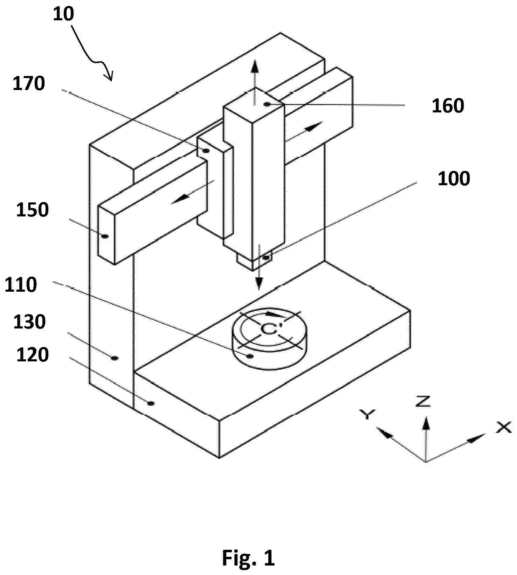

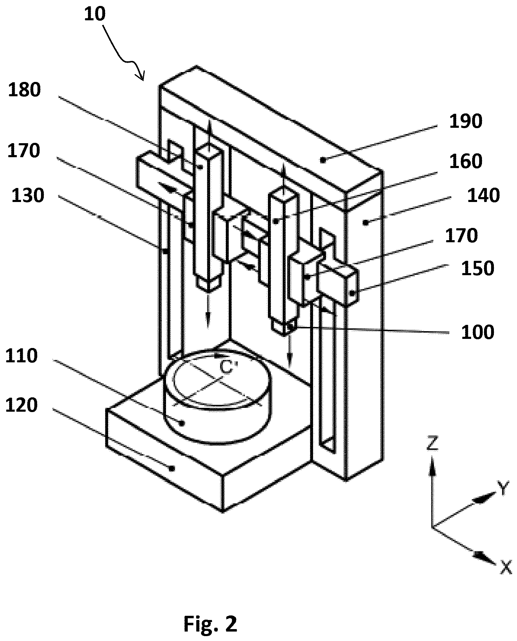

Large vertical lathes typically comprise two vertical columns and a transversal crossbeam which may be vertically displaceable in a z-direction upon guiding means on the vertical columns. A transversal support carriage is displaceable along longitudinal guides of the transversal crossbeam in a horizontal x-direction. A milling head for holding a tool is mounted in the transversal carriage and is therefore displaceable at least in the x-direction, but fixed in the y-direction. The lathe also comprises a turning table for holding a workpiece wherein the turning table may be configured to move the work-piece in the z-direction. Other configurations of vertical lathes are known, two of which are shown in Figs. 1 and 2.

In the example shown in figure 1, the turning table 110 is fixed in the z-direction and the milling head 160 is moveable along the cross rail 150 by means of a support carriage 170. The vertical lathe has only a single vertical column 130.

A gantry type vertical lathe with two milling heads 160, 180 is shown in figure 2. The cross rail 150 is moveable in the z-direction along vertical guides in the columns 130, 140. Figures 3 and 4 respectively show a front and plan view of a large vertical lathe with two columns and a single milling head 160. By default, the centre of a tool mounted on the milling head is aligned with the turning axis of the turning table 110. It is important for the quality of the product that the default position is determined accurately as this is used to calibrate the milling head.

However, such vertical lathes are often placed in environments with a wide range of ambient temperature fluctuations. These may vary between day and night temperatures and/or seasonal temperatures for example. Such temperature changes can have considerable effects on the geometry of a vertical lathe, especially causing the cross rail 150 to arch in the XZ and XY planes. This in turn displaces the milling head from its default position so that it no longer precisely coincides with the axis of the turning table and this has a negative effect on the quality of the products processed by the lathe.

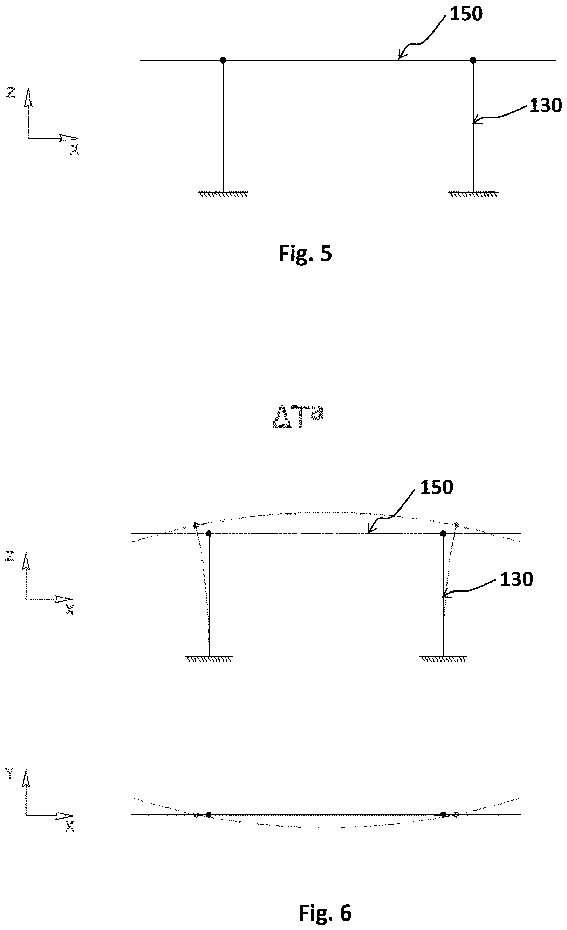

Figures 5 and 6 respectively show a schematic representation at an ideal default temperature and at an increased temperature of the cross-rail and two columns of a vertical lathe. The expansion of the metal can be seen to cause the cross-rail in particular to arch in the XZ and XY planes.

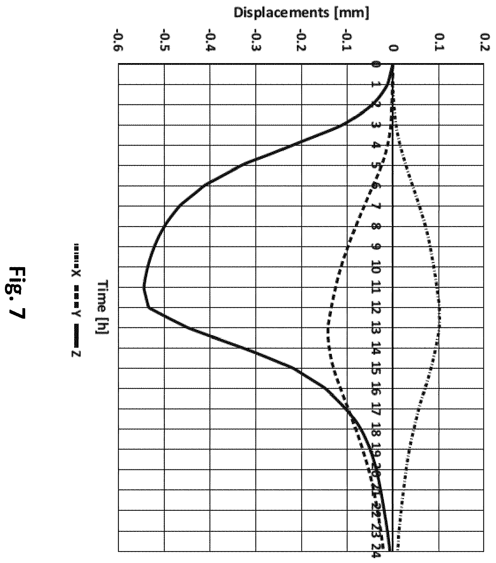

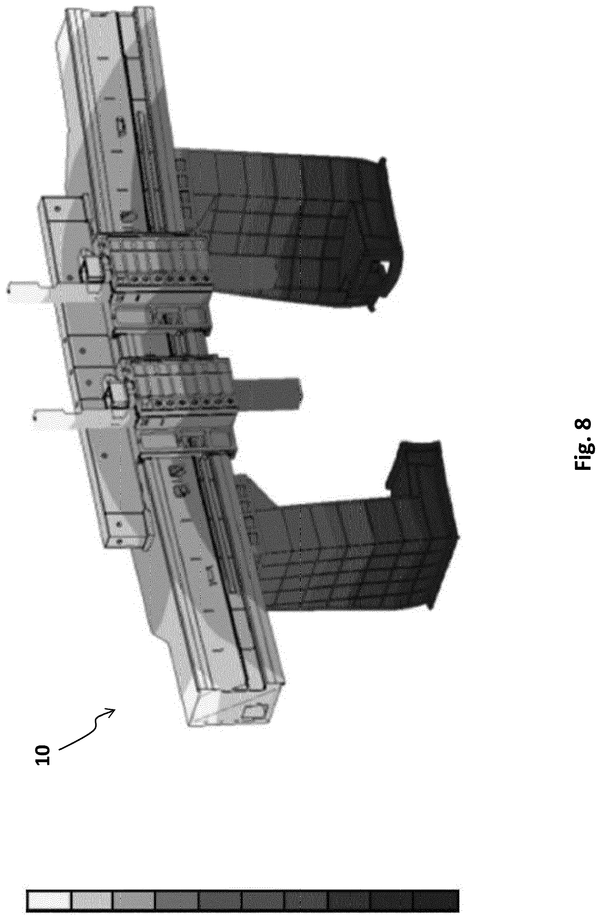

Figure 7 shows the quantitative results of a simulation of the displacement of the tip of a tool mounted to a milling head of a vertical lathe in the x, y and z directions when exposed to a temperature change of 10 °C over a period of 24 hours. Figure 8 graphically shows the results of the same simulation. The colour map shows the distribution of the deformation across the structure of the vertical lathe such that it can be observed that the largest deformation occurs at the top of the lathe, especially in the cross-rail.

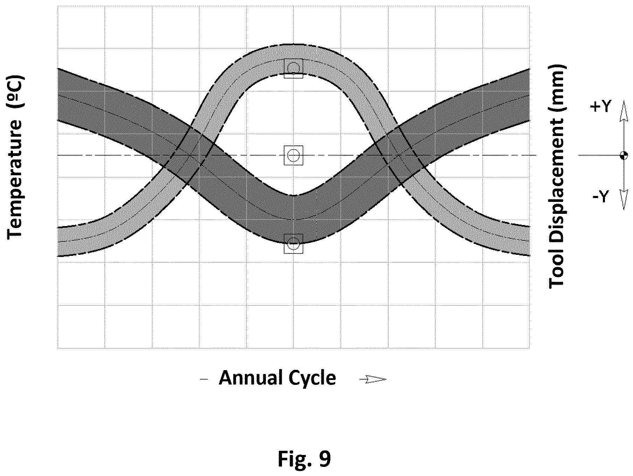

In addition to the temperature changes that may typically occur over a 24-hour cycle, the results of a simulation of the effects of seasonal temperature changes are shown in Fig. 9 where the breadth of the shaded areas represents the effects of the daily temperature changes. The area shaded in darker grey represents the positions of the centre of a tool mounted on a milling head in the y-direction which changes over the course of the year as well as the day. The line passing through the shaded area represents the daily average position of the centre of the tool. The area shaded in lighter grey represents the temperature change over the course of the year including the daily temperature changes. The line passing through the centre of the shaded area represents the daily average temperature. The horizontal dashed line passing through the figure represents the ideal position of the milling head in the y-direction which coincides with the position of the axis of rotation of the turning table below it.

It is known that in a vertical lathe, a plurality of instruments may be arranged around the milling head and/or the tool and used to experimentally analyse the displacement of the tool with a change in temperature. The measurements are recorded over a period of time, for example 24 hours, in which the ambient temperature and the displacement of the tool are simultaneously measured. This can allow the thermal inertia of the structure also to be evaluated and taken into account when developing solutions to minimise the effects of temperature on the machine. It was found that temperature changes could affect the geometry of the vertical lathe in the proportion 1.2 10⁻⁵ ºC⁻¹.

EP3222385 B1 teaches a method for compensating for the misalignment between the centre of the tool and the axis of the turning table which comprises moving the milling head along guides in the milling head support, wherein the guides move the milling head simultaneously in the z and y-directions and have an angle of 0.5 - 1.5º with respect to the ZX plane. Such a solution is limited in the range of displacement it can compensate for and is dependent on the milling head being moveable in the z-direction.

CN208276515U teaches a method for compensating for thermal error in a mineral goods lathe bed which comprises the use of cooling pipes embedded in the lathe bed and changing the internal material of the lathe-bed to one of low thermal conductivity and low thermal shrinkage. However, as this document explains in paragraph [0029], it is directed towards compensating for local temperature rises as a result of the operation of the machine. Furthermore, the cooling is not localised to a critical area which causes misalignment of the machine.

Other known solutions include providing means for the milling head in a vertical lathe to be moved in the y-direction, significantly adding to the complexity of the machine.

The provision of a solution to minimise the effect of ambient temperature changes, including seasonal temperature changes, on the alignment of a vertical lathe without the need for movement of the milling head in the y or z-direction would therefore be advantageous.

### DESCRIPTION OF THE INVENTION

For overcoming the mentioned drawbacks and to achieve the aforementioned aims, the invention proposes a vertical lathe where X, Y and Z directions are defined, and the lathe comprises:
- a support for the part to be shaped;
- a milling head having an axis in the Z-direction; wherein the axis of the milling head is fixed in the Y-direction;
- a cross-rail for guiding a relative movement between the milling head and the support according to the X-direction; characterized in that the vertical lathe comprises a cooling circuit in the cross-rail.

In some embodiments, the cooling circuit has a first branch placed near an upper corner of the cross-rail section in the anterior portion of the cross-rail and a second branch placed near the lower corner of the cross-rail section in the anterior portion of the cross-rail.

In some embodiments, the first branch and the second branch are connected in series.

In some embodiments, each branch has a flow duct and return duct, such that the branches are connected therebetween at one end of the cross-rail.

In some embodiments, the relative movement between the milling head and the support is guided by two rail guides arranged along the upper and lower corners of the cross-rail in the anterior portion, each branch of the cooling circuit being arranged along a respective rail guide.

In some embodiments the vertical lathe comprises at least one support column for supporting the cross-rail, preferably two support columns which support the cross-rail at its ends.

In some embodiments the vertical lathe comprises two support columns that support the cross-rail at two ends thereof.

In some embodiments, the vertical lathe comprises a mobile support for moving each milling head in the X-direction and wherein the cooling circuit is arranged in an anterior portion of the cross-rail, wherein the anterior portion is closest to the mobile support.

In some embodiments the vertical lathe comprises a control loop for controlling the cooling circuit.

In some embodiments, the control loop comprises a temperature sensor for sensing the temperature in an area of the cross-rail.

In some embodiments the vertical lathe comprises a four-way valve for controlling the heat removal rate of the cooling circuit.

In some embodiments, the control loop is configured to switch on the flow in the cooling circuit when the temperature in the area of the cross-rail exceeds an upper threshold temperature and to switch off the flow in the cooling circuit off when the temperature falls below a lower threshold temperature.

The invention also relates to a method of controlling the dilatation of a vertical lathe as defined in any of the above inventive variants, wherein the method comprises:
- sensing the temperature in an area of the cross-rail,
- comparing the sensed temperature to an upper threshold temperature and to a lower threshold temperature,
- opening a valve to allow flow of cooling fluid through the cooling circuit if the sensed temperature is higher than an upper threshold temperature and closing the valve to stop flow through the cooling circuit if the sensed temperature is lower than a lower threshold temperature.

In some embodiments, the method further comprises adjusting the flow rate of cooling fluid through the cooling circuit depending on the difference between the sensed temperature and the upper threshold temperature when the sensed temperature is higher than the upper threshold temperature.

### BRIEF DESCRIPTION OF THE DRAWINGS

To complete the description and in order to provide a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:
Fig. 1 shows a perspective view of a vertical lathe with a single milling head according to the prior art.
Fig. 2 shows a perspective view of another vertical lathe with two milling heads moveable in the x and z-directions according to the prior art.

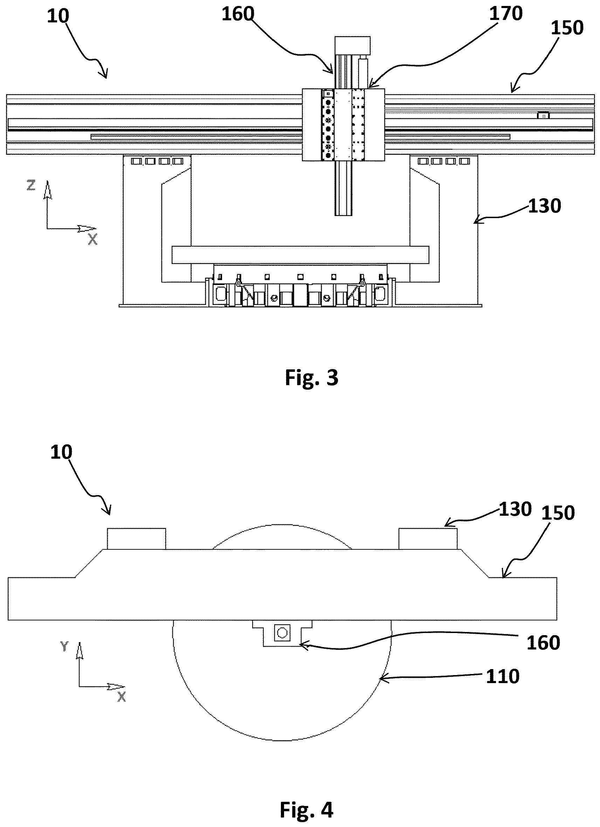

Fig. 3 shows a front view of a vertical lathe according to the prior art.
Fig. 4 shows a plan view of the vertical lathe of fig. 3.
Fig. 5 shows a schematic illustration of a front view of the vertical lathe of fig. 3 at an ideal temperature without deformation.
Fig. 6 shows a schematic illustration of a front and plan view of the vertical lathe of fig. 3 at a higher temperature causing deformation in the ZX and XY planes.
Fig. 7 shows the quantitative results of a simulation of the effect of temperature changes over time on the displacement of the centre of a tool on a milling head with respect to the axis of a turning table.
Fig. 8 shows the qualitative results of the simulation of fig. 7 showing the distribution of deformation across the vertical lathe.
Fig. 9 shows a characteristic curve of the temperature changes over the course of a year and corresponding displacement of the tool centre with respect to the axis of a turning table.

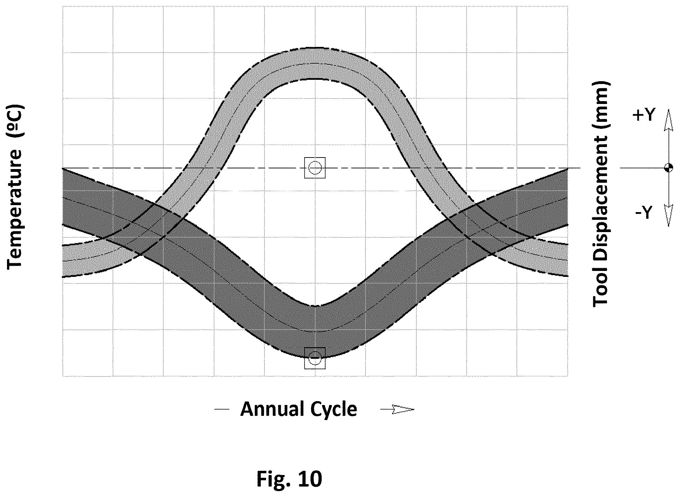

Fig. 10 shows a characteristic curve of temperature and displacement used to define a default milling head position such that the correction of the position is only required in one y-direction.

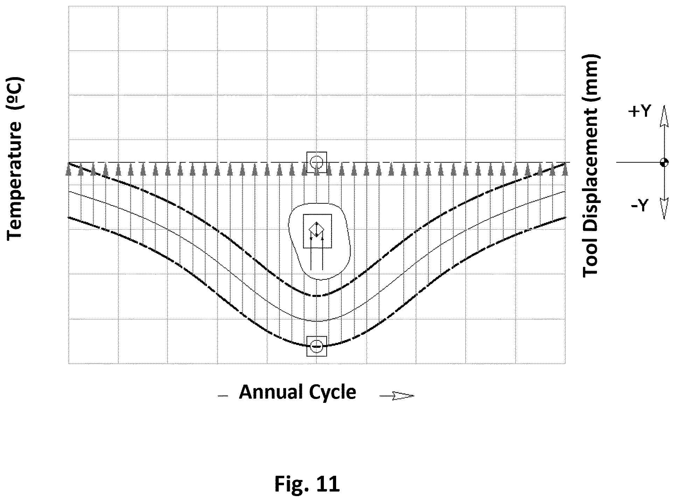

Fig. 11 illustrates the range of displacement correction required and use of the characteristic curve to calculate a maximum cooling capacity required by the system.

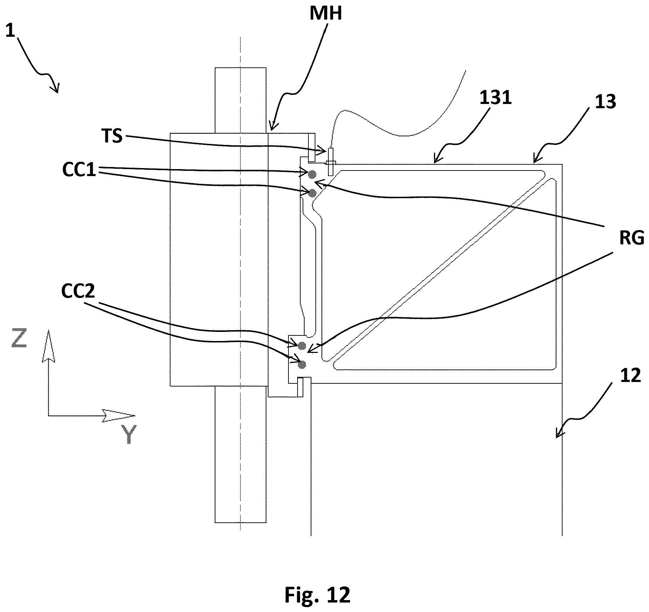

Fig. 12 shows a side view of a cross-section of the vertical lathe according to a preferred embodiment of the invention including a cooling circuit installed in the cross-rail.

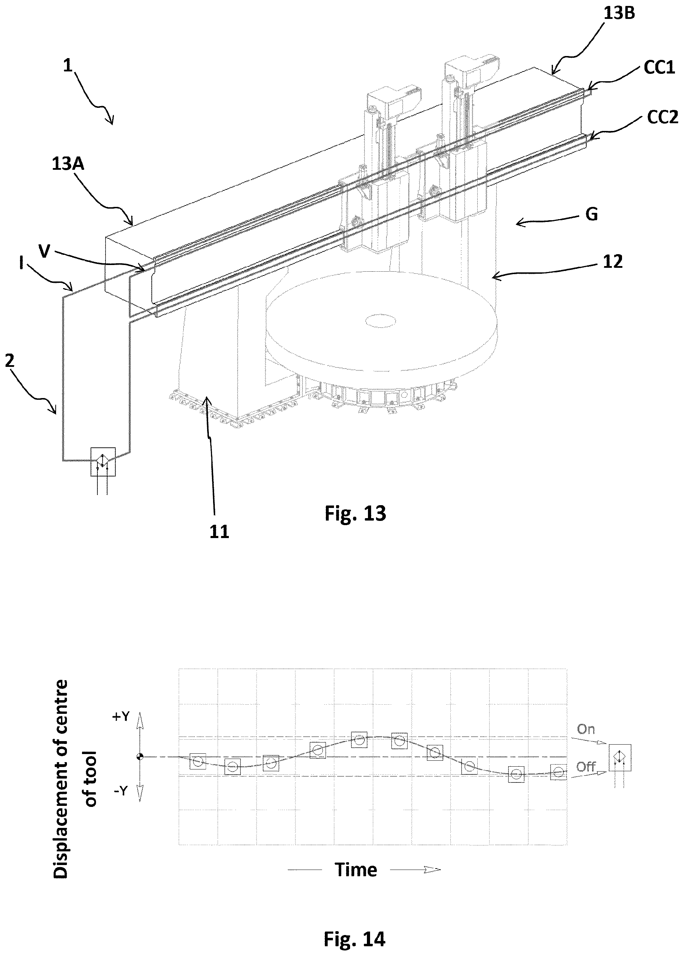

Fig. 13 shows a perspective view of the vertical lathe according to the preferred embodiment of the invention.
Fig. 14 shows the effect of the cooling circuit on the displacement of the centre of the tool according to an embodiment of the invention.

### DESCRIPTION OF A WAY OF CARRYING OUT THE INVENTION

As shown in Fig. 13, the invention relates to a vertical lathe 1 where X, Y and Z directions are defined. The X direction is the direction of displacement between the support table or platform and the body of the milling head. The Z direction is the vertical direction. The Y direction is the direction that is perpendicular both to the X direction and the Z direction.

The vertical lathe comprises:
- a turntable T for supporting the part to be shaped;
- a milling head MH having an axis in the Z-direction; and
- a cross-rail 13 for guiding a relative movement between the milling head MH and the support T according to the X-direction. In the embodiment shown, the cross rail supports the milling head and serves as a guide for it. However, we point out that the invention is useful for embodiments where the cross rail supports and guides the turntable T.

In any case, the invention applies to lathes in which the axis of the milling head MH is fixed in the Y-direction.

These features being known, the present invention proposes that the vertical lathe 1 comprises a cooling circuit 2 in the cross-rail 13.

In some embodiments, the circuit has the general direction of the longitudinal axis of the cross rail, that is, the X direction. However, although not shown, the circuit or circuits could be arranged transversally, or vertically, or any combination allowing the transfer of heat from the cross rail.

In a preferred embodiment, the cooling circuit 2 has a first branch CC1 placed near an upper corner of the cross-rail section in the anterior portion 131 of the cross-rail 13 and a second branch CC2 placed near the lower corner of the cross-rail section in the anterior portion 131 of the cross-rail 13, as shown in figures 12 and 13. These branches are preferably connected in series.

In a specific arrangement, as shown in Fig. 13, each branch CC1, CC2 has a flow duct I and return duct V, such that the branches CC1, CC2 are connected therebetween at one end 13A of the cross-rail 13.

It is preferred that the ducts are placed on corners of the cross beam that are near the guiding means. The guiding means are two rail guides RG arranged along the upper and lower corners of the cross-rail 13 in the anterior portion 131 and each branch of the cooling circuit CC1, CC2 being arranged along a respective rail guide RG.

Optionally, the ducts are mounted in channels formed in the cross-rail 13. The ducts may comprise tubes and fittings between the tubes and other components such as valves or pumps. The channels may be formed by drilling deep holes in the rail guides RG, preferably in the hardened metal protruding portions on the anterior face of the rail guides.

In the embodiment shown, the lathe comprises two support columns 11, 12 which support the cross-rail 13 at its ends 13A, 13B, or near its ends.

As shown, the lathe comprises a mobile support SMH for moving each milling head MH in the X-direction and wherein the cooling circuit 2 is arranged in an anterior portion 131 of the cross-rail 13, wherein the anterior portion is closest to the mobile support SMH.

In all the embodiments, the vertical lathe 1 comprises a control loop for controlling the cooling circuit 2, which in turn, as shown in FIG. 12, comprises a temperature sensor TS for sensing the temperature T in an area of the cross-rail 13. Alternatively, various temperature sensors may be used in various parts of the lathe which may not all be located in the cross-rail.

One way of controlling the heat removal rate is by means of a four-way valve V for controlling the heat removal rate of the cooling circuit 2.

The control loop is preferably configured to switch on the flow in the cooling circuit 2 when the temperature T in the area of the cross-rail 13 exceeds an upper threshold temperature UT and to switch off the flow in the cooling circuit off when the temperature T falls below a lower threshold temperature LT.

In this text, the term "comprises" and its derivations (such as "comprising", etc.) should not be understood in an excluding sense, that is, these terms should not be interpreted as excluding the possibility that what is described and defined may include further elements.

The invention is obviously not limited to the specific embodiments described herein, but also encompasses any variations that may be considered by any person skilled in the art within the general scope of the invention as defined in the claims.

## Claims

**1.** Vertical lathe (1) wherein X, Y and Z directions are defined, comprising:
- a support (T) for the part to be shaped;
- a milling head (MH) having an axis in the Z-direction; wherein the axis of the milling head (MH) is fixed in the Y-direction;
- a cross-rail (13) for guiding a relative movement between the milling head (MH) and the support (T) according to the X-direction; **characterized in that** the vertical lathe (1) comprises a cooling circuit (2) in the cross-rail (13).

**2.** Vertical lathe (1) according to claim 1, wherein the cooling circuit (2) has a first branch (CC1) placed near an upper corner of the cross-rail section in the anterior portion (131) of the cross-rail (13) and a second branch (CC2) placed near the lower corner of the cross-rail section in the anterior portion (131) of the cross-rail (13).

**3.** Vertical lathe (1) according to claim 2, wherein the first branch (CC1) and the second branch (CC2) are connected in series.

**4.** Vertical lathe (1) according to claim 3, wherein each branch (CC1, CC2) has a flow duct (I) and return duct (V), such that the branches (CC1, CC2) are connected therebetween at one end (13A) of the cross-rail (13).

**5.** Vertical lathe (1) according to any of claims 2 to 4 wherein the relative movement between the milling head (MH) and the support (T) is guided by two rail guides (RG) arranged along the upper and lower corners of the cross-rail (13) in the anterior portion (131), each branch of the cooling circuit (CC1, CC2) being arranged along a respective rail guide (RG).

**6.** Vertical lathe (1) according to any of the preceding claims, comprising at least one support column (11, 12) for supporting the cross-rail (13).

**7.** Vertical lathe (1) according to claim 6, which comprises two support columns (11, 12) that support the cross-rail (13) at two ends (13A, 13B) thereof.

**8.** Vertical lathe (1) according to any of the preceding claims, which comprises a mobile support (SMH) for moving each milling head (MH) in the X-direction and wherein the cooling circuit (2) is arranged in an anterior portion (131) of the cross-rail (13), wherein the anterior portion is closest to the mobile support (SMH).

**9.** Vertical lathe (1) according to any of the preceding claims, which comprises a control loop for controlling the cooling circuit (2).

**10.** Vertical lathe (1) according to claim 9, wherein the control loop comprises a temperature sensor (TS) for sensing the temperature (T) in an area of the cross-rail (13).

**11.** Vertical lathe (1) according to any of the preceding claims, which comprises a four-way valve (V) for controlling the heat removal rate of the cooling circuit (2).

**12.** Vertical lathe (1) according to claim 10 or 11, wherein the control loop is configured to switch on the flow in the cooling circuit (2) when the temperature (T) in the area of the cross-rail (13) exceeds an upper threshold temperature (UT) and to switch off the flow in the cooling circuit off when the temperature (T) falls below a lower threshold temperature (LT).

**14.** Method of controlling the dilatation of a vertical lathe (1) as defined in any of claims 1 to 13, wherein the method comprises:
- sensing the temperature (T) in an area of the cross-rail (13),
- comparing the sensed temperature (T) to an upper threshold temperature (UT) and to a lower threshold temperature (LT),
- opening a valve to allow flow of cooling fluid through the cooling circuit (2) if the sensed temperature (T) is higher than an upper threshold temperature (UT) and closing the valve to stop flow through the cooling circuit (2) if the sensed temperature (T) is lower than a lower threshold temperature (LT).

**15.** The method of claim 14 wherein the method further comprises adjusting the flow rate of cooling fluid through the cooling circuit (2) depending on the difference between the sensed temperature (T) and the upper threshold temperature (UT) when the sensed temperature (T) is higher than the upper threshold temperature (UT).
